# EUROPEAN PATENT SPECIFICATION

(11) **EP 2 299 731 B1**
(45) Date of publication and mention of the grant of the patent: **20.06.2012**
(21) Application number: 09170863.6
(22) Date of filing: 21.09.2009
(51) Int. Cl.: H04R 1/10, H04R 25/00, H04R 5/033

(54) **Listening device with a rechargeable energy source, method, use and system thereof**
Hörvorrichtung mit wiederaufladbarer Energiequelle, deren Verfahren, Anwendung und Hörsystem
Dispositif d'écoute avec source d'énergie rechargeable, procédé, utilisation et système du même

(43) Date of publication of application: 23.03.2011
(60) Divisional application: 12159695.1
(73) Proprietor: OTICON A/S, 2765 Smørum (DK)
(72) Inventor: Hastrup, Simon, 2765, Smørum (DK)
(74) Representative: Nielsen, Hans Jörgen Vind

(56) References cited:
- EP-A2- 1 921 893
- EP-A2- 2 034 768
- EP-A2- 2 063 669

## Description

### TECHNICAL FIELD

The present invention relates to portable electronic listening devices comprising an electrically rechargeable energy source. The invention relates specifically to a listening device comprising a rechargeable energy source, the listening device comprising an ITE part adapted for being located in an ear canal of a user and a BTE part adapted for being located behind an ear of the user.

The invention furthermore relates to a method of charging a rechargeable energy source of a listening device. The invention furthermore relates to a listening system comprising a listening device and a charging station.

The invention may be useful in a listening device using a rechargeable energy source, e.g. a rechargeable battery.

### BACKGROUND ART

Rechargeable energy sources (e.g. batteries) find increasing use in listening devices. Wired (cf. e.g. WO 2007/101439 A2) or wireless (cf. e.g. EP 1 727 395 A2) recharging of rechargeable batteries are alternatively used by charging stations. The present application deals with recharging based on a galvanic connection between charging station and rechargeable energy source.

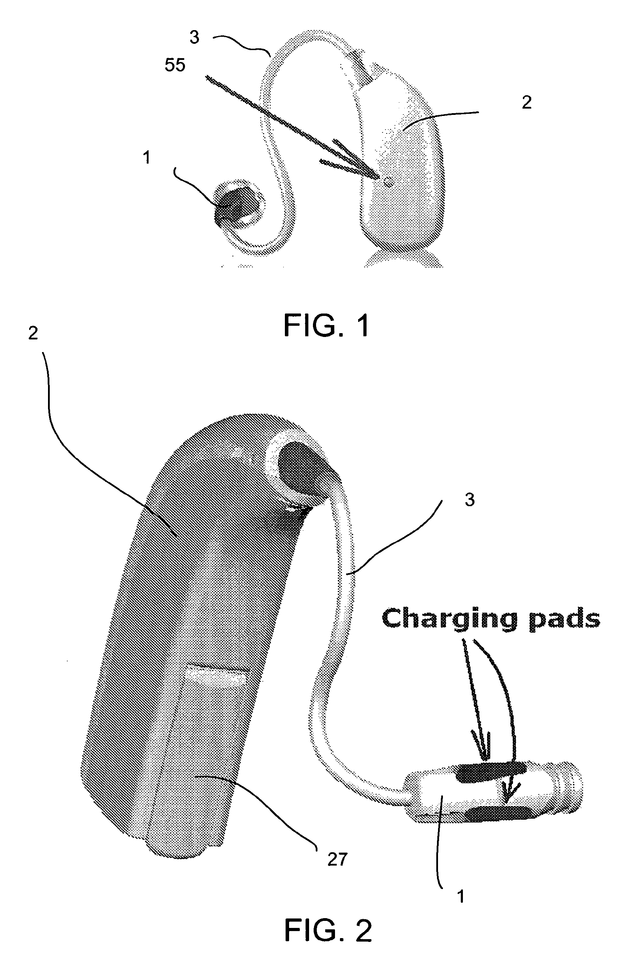

Charging pads are e.g. placed on the main body of a listening device, cf. behind the ear (BTE) hearing aid example of FIG. 1, where a receiver (speaker) of the listening device is located in the ear canal (RITE) and the two parts are mechanically and electrically connected by a connecting tubular element.

EP 2 034 768 A2 deals with a hearing aid having a retractable contact unit in the hearing aid housing, which is formed such that the retractable contact unit contacts an external unit (e.g. a battery charging unit) in a retracted position or in pull-out position. The contact unit is inserted in the external unit.

The invention deals with various ways of placing the charging pads or contact terminals in or on a portable listening device.

### DISCLOSURE OF INVENTION

The idea is to move the charging pads away from the main body (e.g. a BTE part adapted to be located at or behind an ear of a user) of the listening device (e.g. a hearing aid) to the "accessories" (e.g. a connecting element for connecting a BTE part with an ITE part) and thereby preferably reuse existing connections. This gives - in an embodiment - the opportunity to have a completely sealed listening device (main body, e.g. BTE part).

The charging pads can have wires of their own in an ITE part comprising a receiver or they can be connected to existing wires, for example the receiver wires (e.g. using appropriate switch elements). If the receiver wires are also used for charging, then a filtration of the signals can be placed either in a BTE-part of the listening device or in an ITE part comprising the receiver.

This invention can be applied to all types of ITE parts, irrespective whether the ITE part only consists of a receiver or it also comprises other components, e.g. a microphone and/or a rechargeable energy source (battery).

An embodiment of the concept comprises the charging of the battery through the *same* connector used to connect the ITE part to the parts of the listening device located in a main body of the listening device, e.g. in a BTE part (the connector in a normal operational mode of the listening device connecting components of the ITE part (e.g. a receiver, a microphone, etc.) to components located in the BTE part, e.g. an output driver, a signal processing unit, etc.).

An object of the present invention is to provide an alternative scheme for charging a rechargeable energy source of a listening device.

Objects of the invention are achieved by the invention described in the accompanying claims and as described in the following.

### A listening device:

An object of the invention is achieved by a listening device comprising an ITE part adapted for being located in an ear canal of a user and a BTE part adapted for being located behind an ear of the user, the ITE and BTE parts being at least mechanically connected by a connecting element, the listening device comprising a rechargeable energy source and electric charge terminals for allowing the charging of the rechargeable energy source when electrically connected to charging terminals of a charging station, wherein the electric charging terminals of the listening device are located in an electrical connector of the connecting element connectable to the BTE part.

In a particular embodiment, the listening device is adapted to provide that electrical contact between the electric charge terminals of the listening device and the charging terminals of the charging station is established via a cable with an electrical connector matching an electrical connector of the BTE part.

In a particular embodiment, the rechargeable energy source comprises a rechargeable battery.

In a particular embodiment, the rechargeable battery is located in the ITE part or in the connecting element.

In a particular embodiment, the ITE part comprises a receiver.

The ITE part comprises a housing for enclosing the functional components of the ITE part, e.g. a receiver and/or a microphone and appropriate electrical connections. In a particular embodiment, the electric charge terminals are located on the housing of the ITE part.

In a particular embodiment, the BTE part comprises a hermetically closed outer housing.

In a particular embodiment, the ITE part comprises a microphone. In an embodiment the microphone is located in the ITE part to ensure that it faces away from the ear drum (and towards the outer environment) when the ITE part is mounted in an ear canal of the user.

In a particular embodiment, the BTE part comprises a signal processing unit. Typically, the signal processing unit is or can be adapted to provide a frequency dependent gain according to a user's needs. In an embodiment, the BTE part comprises a driver (e.g. including a DA- or DD-converter) for driving the receiver.

In a particular embodiment, the ITE part or the connecting element comprises circuitry for managing the charging of the rechargeable energy source.

In a particular embodiment, the connecting element comprises seven or less electrical conductors for establishing electrical connections between the BTE part and the ITE part, e.g. less than 6 or less than 5 or less than 4 connections. In an embodiment, the BTE part and/or the ITE part comprises circuitry adapted to allow a use of one or more of the electrical conductors for several purposes depending on the mode of operation, e.g. 1) to connect a charging station to the rechargeable energy source during a charging mode and 2) to connect a receiver or microphone of the ITE part to the BTE part (e.g. to a signal processing unit located in the BTE part) during a normal mode of operation of the listening device.

In a particular embodiment, the electrical connector of the connecting element, which is used for charging the rechargeable energy source in a charging station, is adapted to be used for electrically connecting the ITE part to the BTE part during normal operation of the listening device. In an embodiment, the connecting element comprises electrical conductors, which in a normal mode of operation of the listening device, are adapted for appropriately connecting functional elements of the ITE part (e.g. a battery, a receiver, a microphone, etc.) with functional elements of the BTE part (e.g. a signal processing unit, an AD-, a DA-conversion unit, a microphone, a battery, etc.).

In a particular embodiment, the listening device comprises a hearing instrument, a headset, a headphone, an active ear protection device or a combination thereof.

### Use:

In an aspect use of a listening device as described above, in the detailed description and in the claims is furthermore provided.

### A method:

A method of charging a rechargeable energy source of a listening device comprising an ITE part adapted for being located in an ear canal of a user and a BTE part adapted for being located behind an ear of the user, the ITE and BTE parts being at least mechanically connected by a connecting element, the listening device comprising a rechargeable energy source and electric charge terminals for allowing the charging of the rechargeable energy source when electrically connected to charging terminals of a charging station is furthermore provided by the present invention. The method comprises charging the energy source via the electric charging terminals located in an electrical connector of the connecting element connectable to the BTE part.

In an embodiment, the method comprises a charging mode, wherein the rechargeable energy source is recharged.

It is intended that the structural features of the device described above, in the detailed description and in the claims can be combined with the method, when appropriately substituted by a corresponding process. Embodiments of the method have the same advantages as the corresponding device.

In an embodiment, the connecting element is adapted to be a renewable (e.g. disposable) part that is regularly exchanged with a corresponding (e.g. new) part. In an embodiment, the ITE part is adapted to be a renewable (e.g. disposable) part that is regularly exchanged with a corresponding (e.g. new) part. In a particular embodiment, the connecting element and the ITE part are adapted to be a combined, renewable (e.g. disposable) part that is regularly exchanged with a corresponding (e.g. new) part. In a particular embodiment, where the rechargeable energy source (e.g. a battery) is located in the ITE part or in the connecting element, the combined, renewable part is exchanged with a corresponding part when the renewable energy source is to be recharged. In an embodiment, the combined, renewable part comprises a receiver and a microphone of the listening device. In an embodiment, the renewable part is exchanged with a corresponding part (which is ready for use), wherein the renewable energy source is partially of fully charged.

### A listening system:

A listening system is moreover provided by the present invention. The listening system comprises at least an ITE part and a connecting element of a listening device as described above, in the detailed description and in the claims and a charging station, wherein the connecting element comprises a connector adapted to electrically connect the ITE part to the BTE part during normal operation of the listening device and where the charging station is adapted to use the connector for electrically charging the energy source of the listening device.

In a particular embodiment, the charging station comprises circuitry for managing the charging of the rechargeable energy source.

Further objects of the invention are achieved by the embodiments defined in the dependent claims and in the detailed description of the invention.

As used herein, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements maybe present, unless expressly stated otherwise. Furthermore, "connected" or "coupled" as used herein may include wirelessly connected or coupled. As used herein, the term "and/or" includes any and all combinations of one or more of the associated listed items. The steps of any method disclosed herein do not have to be performed in the exact order disclosed, unless expressly stated otherwise.

### BRIEF DESCRIPTION OF DRAWINGS

FIG. 1 shows a receiver in the ear-type hearing instrument comprising charging terminals located on a BTE-part of the instrument,
FIG. 2 shows a receiver in the ear-type hearing instrument comprising charging terminals located on an ITE-part of the instrument,
FIG. 3 shows an embodiment of a listening device (FIG. 3a) and an embodiment of a listening system (FIG. 3b), and
FIG. 4 shows an embodiment of a listening system (FIG. 4a) and an embodiment of a listening device (FIG. 4b).

The figures are schematic and simplified for clarity, and they just show details which are essential to the understanding of the invention, while other details are left out. Throughout, the same reference numerals are used for identical or corresponding parts.

Further scope of applicability of the present invention will become apparent from the detailed description given hereinafter.

### DETAILLED DESCRIPTION

FIG. 1 shows a receiver in the ear-type hearing instrument comprising charging terminals located on a BTE-part of the instrument. The hearing instrument comprises a BTE-part 2, an ITE part 1 and a connecting element 3. The housing of the BTE part comprises charging contacts 55 on each side of the housing for recharging the rechargeable battery in a charging station by making a galvanic contact to corresponding terminals of the charging station. The BTE part comprises battery, microphone unit, signal processing unit and possible other functional units of a hearing instrument. The ITE part 1 comprises (in this example a receiver located in an ear-canal-locating flexible element to ensure an appropriate position of the receiver when mounted in the ear canal of a user. The semi-flexible connecting element 3 comprises electrical conductors for connecting the receiver to the circuitry of the BTE part (e.g. the signal processing unit). The length and rigidity of the connecting element is adapted to allow a certain adaptation of its form to the anatomy of the user, so that the ITE and BTE parts can be appropriately located in the ear canal and at the ear of the user, respectively, and so that its form is maintained during normal handling of the hearing instrument (e.g. to allow mounting and taking off of the instrument).

FIG. 2 shows a receiver in the ear-type hearing instrument comprising charging terminals (*Charging pads* in FIG. 2) located on an ITE-part 1 of the instrument. The ITE part 1 comprises a receiver for presenting a processed signal to a user, when the ITE part is located in an ear canal of the user. The rechargeable energy source, here a rechargeable battery, is placed in the BTE part 2 of the hearing instrument, cf. battery drawer 27. In this example, the charging current during recharge in a charging station is picked up by the *Charging pads* of the ITE-part and fed through appropriate electrical conductors in the connecting element 3 to the rechargeable battery in the BTE part 2. In addition to the battery, the BTE-part 2 of the hearing instrument comprises a microphone system (e.g. a directional microphone system) for picking up sounds from the environment and converting them to corresponding electrical input signals and a signal processing unit for enhancing the electrical input signals, typically including to apply a frequency dependent gain to the signal in accordance with a user's needs. The BTE part may further comprise other functionality of a state of the art hearing instrument (e.g. a telecoil and/or other wired or wireless receiver and corresponding circuitry).

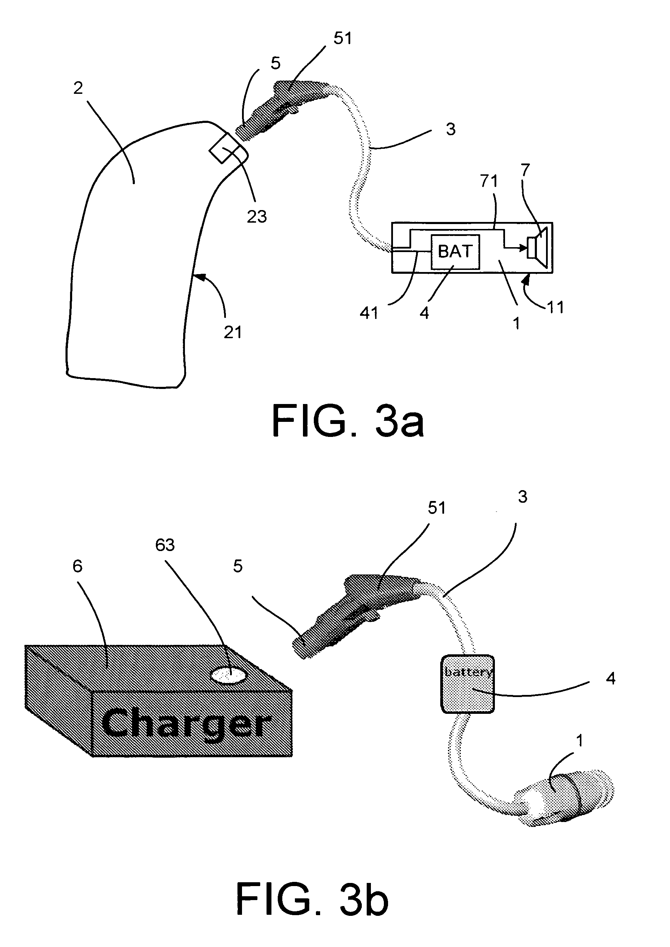

FIG. 3 shows an embodiment of a listening device (FIG. 3a) and an embodiment of a listening system (FIG. 3b). In this embodiment the listening system, e.g. a hearing instrument, in which the battery is placed, is adapted to be charged through a connector 5, 51 of the connecting element 3. In the listening device of FIG. 3a, the ITE part 1 comprises a rechargeable battery (*BAT* in FIG. 3a) and a receiver 7 enclosed in ITE housing 11. The BTE part comprises other functionality of the hearing instrument, including signal processing and microphone units. The housing 21 of the BTE part comprises connector 23 adapted to receive and electrically connect connector 5 of the connecting element. The connector 5 of the connecting element 3 comprises an electrically insulating element 51 adapted for facilitating placement or removal of the connecting element in/from the corresponding sockets 23, 63 of the BTE part 2 and the charging station 6, respectively. The BTE part 2, the socket 23, the plug 5, the connecting element 3 and the ITE part 1 comprise electrical conductors (cf. 41, 71 in the ITE part, each possibly comprising a number of separate electrical conductors to establish the connection) for 1) electrically connecting the battery (*BAT*) and the receiver 7 to the relevant functional units of the BTE part 2, when the connector (plug) 5 of the connecting element 3 is placed in the appropriate connector (socket) 23 of the BTE part, in a *normal operating mode* (FIG. 3a), and for 2) electrically connecting the battery (*BAT*) to a charging source in a charging station 6, when the connector (plug) 5 of the connecting element 3 is placed in the appropriate connector (socket) 63 of a charging station 6, in a *charging mode* (FIG. 3b).

FIG. 3b illustrates a charging mode of a hearing aid system comprising charger 6 and a connecting element 3 and ITE part 1 of a listening device. In the embodiment of FIG. 3b, the rechargeable battery 4 is located in the connecting element 3 (instead of in the ITE part 1 as in FIG. 3a), but the function and external form and number of conductors/pins of the connector 5, 51 may be identical to those of the embodiment of FIG. 3a.

The charger-cable (connecting element 3) is connected to the ITE part and thereby reusing the connecting element to recharge the battery.

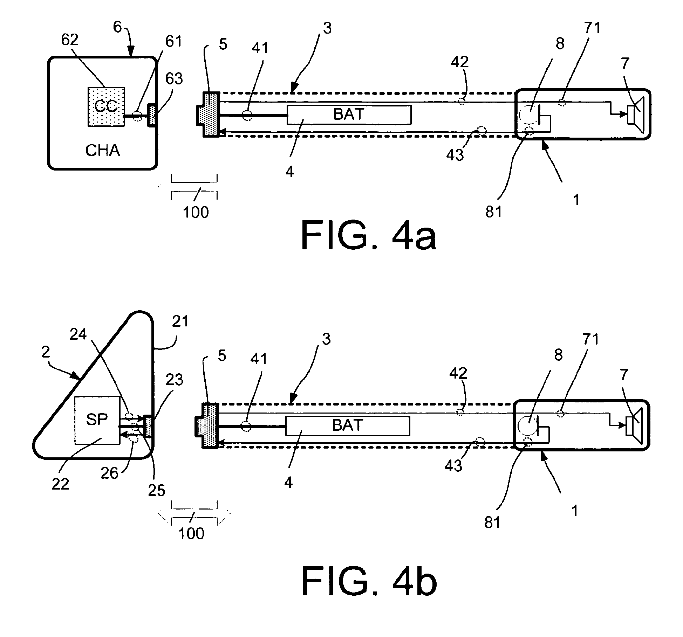

FIG. 4 shows an embodiment of a listening system (FIG. 4a) and an embodiment of a listening device (FIG. 4b). In this embodiment the ITE part 1 comprises receiver 7 as well as microphone 8, whereas the rechargeable battery 4 (*BAT*) is integrated with the connecting element 3. It may alternatively form part of the ITE part (as suggested in the embodiment of FIG. 3a).

FIG. 4a shows an embodiment of a listening system comprising a charger 6, a connecting element 3 and an ITE part 1 of a listening device. The arrow 100 illustrates the possible connection and disconnection of connectors 63 and 5 of the charging station 6 and the connecting element 3, respectively. The charging station 6 (*CHA* in FIG. 4a) comprises charging source and circuitry 62 (CC in FIG. 4a), which may be specifically adapted for charging a particular type of rechargeable energy source. When the connectors 63 and 5 of the charging station 6 and the connecting element 3 are joined (electrically connected), a charging process may be initiated in the charging station that recharges the battery via electrical connections 61 and 41 through connectors 63, 5. The electrical connections 61, 41 may comprise more than one electrical conductor, typically 2 electrical conductors each. Typically, no electrical connection to the electrical components of the connecting element 3 and the ITE part 1 (here microphone 8 and receiver 7) other than to the battery (*BAT*) is established during charging of the rechargeable battery (in the charging mode of the listening system).

FIG. 4b shows an embodiment of a listening device comprising a BTE part 2, a connecting element 3 and an ITE part 1. The arrow 100 illustrates the possible connection and disconnection of connectors 23 and 5 of the BTE part and connecting element 3, respectively. When the connectors 23 and 5 of the BTE part 2 and the connecting element 3 are joined (electrically connected), electrical connections between the signal processing unit 22 (SP) of the BTE part 2 and the battery 4 (*BAT*), the receiver 7 and the microphone 8 of the connecting element 3 and the ITE part 1 are established through connectors 23, 5. The battery 4 provides energy to the electrical units of the hearing instrument, here the BTE part (including the signal processing unit 22) and the ITE part (including the microphone 8). The electrical connections 25, 41 between battery and BTE part may comprise more than one electrical conductor, typically 2 electrical conductors each. Similarly, the electrical connections 24, 42, 71 between the BTE part and the receiver of the ITE part may comprise more than one electrical conductor, typically 2 electrical conductors each. Similarly, the electrical connections 81, 43, 26 between the microphone of the ITE part and the BTE part may comprise more than one electrical conductor, typically 3 electrical conductors each.

In an embodiment, the BTE part, the connecting element and/or the ITE part comprises electronic elements adapted for - in a charging mode - allowing the use of at least one, e.g. two or more, of the electrical conductors of the connecting element (and possibly corresponding contact element(s) of the electrical connector of the connecting element), which - in a normal mode of operation of the listening device - is used for connecting functional elements of the ITE and BTE parts, respectively, for the charging of the rechargeable battery.

In a preferred embodiment, the BTE part 2 comprises a hermetically closed housing 21 to protect the electronic circuitry of the BTE part from the aggressive environment of a human ear canal (salty, humid). This is feasible, because the microphone and receiver are located outside the BTE part (the BTE part comprising only signal processing (*SP*) and possible other functionality (e.g. wireless communication circuitry), which does not require openings in the housing). This has the further advantage that the customized parts of the hearing instrument is concentrated to the BTE part, whereas the rest (here connecting element 3 and ITE part 1) comprises standard components that may be exchanged during the lifetime of the hearing instrument, either regularly or when needed (e.g. when the rechargeable energy source has degraded to an unacceptable level, e.g. due to too many recharging cycles).

A hermetically closed BTE part enclosing a number of electronic parts (e.g. mounted on a substrate. e.g. a flexible printed circuit board) can be made in a number of different ways. In an embodiment, the housing of the BTE part moulded around the components, e.g. directly around (so that the mould may be allowed to touch the enclosed components) or around an intermediate shell or skeleton (e.g. protecting selected components) used as a carrier for the mould. In an embodiment, two or more shell parts are glued or welded together. In an embodiment, two or more shell parts are joined together by micro-snap elements that irreversibly and hermetically joins the parts (e.g. by inserting an intermediate sealing element, e.g. a gasket, between the shell parts). In an embodiment, the hermetically closed BTE part is adapted to be able to withstand commonly occurring pressure differences (e.g. up to 2 or 3 atm. difference). Alternatively or additionally, the housing of the BTE part is provided with a pressure equalization valve adapted for allow a pressure equalization, if the pressure difference between the interior and exterior of the housing exceeds a predefined threshold level, e.g. 1 atm, or exceeds a predefined factor, e.g. a facto of 2 or 3.

The connecting element 3 and the ITE part 1 shown in FIG. 4a are adapted to be used with the BTE part 2 of FIG. 4b thereby constituting the listening device of FIG. 4b.

An elongate, rechargeable battery may in general be implemented in a number of ways. One possible solution providing a wire- or cable-like battery is discussed in WO 2006/077192 A1. A rechargeable battery for use in a listening device may e.g. be of the NiMH-type or of the Li-Ion-type.

The connection between the BTE and ITE parts of the embodiments of FIG. 2-4 can e.g. be made by standard n-pin connectors, e.g. of the plug and socket type, e.g. standard 3, 4 and 5 pin connectors CS43, CS44 and CS45 (plugs and sockets according to IEC-118-12 are e.g. available from Sonion/Pulse Engineering Inc., e.g. Roskilde, Denmark).

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims.

### REFERENCES

WO 2006/077192 A1 (OTICON) 27-07-2006
WO 2007/101439 A2 (GN RESOUND) 13-09-2007
EP 1 727 395 A2 (AUDIA AKUSTIK) 29-11-2006

## Claims

1. A listening device comprising an ITE part (1) adapted for being located in an ear canal of a user and a BTE part (2) adapted for being located behind an ear of the user, the ITE and BTE parts being at least mechanically connected by a connecting element (3), the listening device comprising a rechargeable energy source (4) and electric charge terminals for allowing the charging of the rechargeable energy source when electrically connected to charging terminals of a charging station (6), **CHARACTERIZED IN THAT** the electric charging terminals of the listening device are located in an electrical connector (5) of the connecting element (3) connectable to the BTE part (2).

2. A listening device according to claim 1 wherein the rechargeable energy source (4) comprises a rechargeable battery.

3. A listening device according to claim 2 wherein the rechargeable battery (4) is located in the ITE part (1) or in the connecting element (3).

4. A listening device according to any one of claims 1-3 wherein the ITE part (1) comprises a receiver (7).

5. A listening device according to any one of claims 1-4 wherein said electrical connector (5) used for charging the rechargeable energy source (4) in a charging station (6) is adapted to be used for electrically connecting the ITE part (1) to the BTE part (2) during normal operation.

6. A listening device according to any one of claims 1-5 wherein the BTE part (2) comprises a hermetically closed outer housing (21).

7. A. listening device according to any one of claims 1-6 wherein the ITE part (1) comprises a microphone (8).

8. A listening device according to any one of claims 1-7 wherein the BTE part (2) comprises a signal processing unit (22).

9. A listening device according to any one of claims 1-8 wherein the ITE part (1) or the connecting element (3) comprises circuitry for managing the charging of the rechargeable energy source (4).

10. Use of a listening device according to any one of claims 1-9.

11. A method of charging a rechargeable energy source of a listening device comprising an ITE part (1) adapted for being located in an ear canal of a user and a BTE part (2) adapted for being located behind an ear of the user, the ITE and BTE parts being at least mechanically connected by a connecting element (3), the listening device comprising a rechargeable energy source (4) and electric charge terminals for allowing the charging of the rechargeable energy source when electrically connected to charging terminals of a charging station (6), **CHARACTERIZED IN THAT** the method further comprises
charging said energy source via said electric charging terminals located in an electrical connector (5) of the connecting element (3) connectable to the BTE part (2).

12. A method according to claim 11 wherein the connecting element (3) and/or the ITE part (1) is adapted to be a renewable part for being regularly exchanged with a corresponding part.

13. A method according to claim 11 or 12 providing that the rechargeable energy source (4) is located in the ITE part (1) or in the connecting element (3), and that the combined, renewable part is exchanged with a corresponding part when the renewable energy source is to be recharged.

14. A listening system,
comprising
at least an ITE part (1) and a connecting element (3) of a listening device according to any one of claims 1-9 and a charging station (6), wherein the connecting element comprises a connector (5) adapted to electrically connect the ITE part (1) to the BTE (2) part during normal operation of the listening device and where the charging station (6) is adapted to use said connector (5) for electrically charging the energy source (4) of the listening device.

15. A listening system according to claim 14 adapted to provide that electrical contact between the electric charge terminals of the listening device and charging terminals of the charging station (6) is established via a cable with an electrical connector (5) matching an electrical connector (23) of the BTE part (2).

## Patentansprüche

1. Hörgerät mit einem ITE-Teil (1), das ausgebildet ist, in einem Gehörgang eines Nutzers platziert zu werden und mit einem BTE-Teil (2), das ausgebildet ist, hinter einem Ohr eines Nutzers platziert zu werden, wobei das ITE- und das BTE-Teil zumindest mechanisch mittels eines Verbindungsteils (3) miteinander verbunden sind, wobei das Hörgerät eine wiederaufladbare Energiequelle (4) und elektrische Ladekontakte aufweist, die das Laden einer wiederaufladbaren Energiequelle erlauben, wenn sie elektrisch mit Ladeankontakten an der Ladestation (6) verbunden sind, **DADURCH GEKENNZEICHNET, DASS** die elektrischen Ladekontakte des Hörgerätes in einem elektrischen Anschluss (5) des mit dem BTE-Teil (2) verbindbaren Verbindungselementes (3) angeordnet sind.

2. Hörgerät gemäß Anspruch 1, bei dem die wiederaufladbare Energiequelle (4) eine wiederaufladbare Batterie aufweist.

3. Hörgerät gemäß Anspruch 2, bei dem die wiederaufladbare Batterie (4) in dem ITE-Teil (1) oder in dem Verbindungselement (3) angeordnet ist.

4. Hörgerät gemäß einem der Ansprüche 1 bis 3, bei dem das ITE-Teil (1) einen Empfänger (7) aufweist.

5. Hörgerät gemäß einem der Ansprüche 1 bis 4, bei dem der zum Laden der wiederaufladbaren Energiequelle (4) in der Ladestation (6) zu nutzende elektrische Anschluss (5) dazu ausgebildet ist, zum elektrischen Verbinden des ITE-Teils (1) mit dem BTE-Teil (2) während normalen Betriebs genutzt zu werden.

6. Hörgerät gemäß einem der Ansprüche 1 bis 5, bei dem das BTE-Teil (2) ein hermetisch geschlossenes äußeres Gehäuse (21) aufweist.

7. Hörgerät gemäß einem der Ansprüche 1 bis 6, bei dem das ITE-Teil (1) ein Mikrophon (8) aufweist.

8. Hörgerät gemäß einem der Ansprüche 1 bis 7, bei dem das BTE-Teil (2) eine Signalverarbeitungseinheit (22) aufweist.

9. Hörgerät gemäß einem der Ansprüche 1 bis 8, bei dem das ITE-Teil (1) ohne das Verbindungselement (3) eine Schaltung zum Steuern des Ladens der wiederaufladbaren Energiequelle (4) aufweist.

10. Verbindung eines Hörgeräts gemäß einem der Ansprüche 1 bis 9.

11. Verfahren zum Laden einer wiederaufladbaren Energiequelle eines Hörgerätes mit einem ITE-Teil (1), das ausgebeildet ist, in einem Gehörgang eines Nutzers platziert zu werden und mit einem BTE-Teil (2), das ausgebildet ist, hinter einem Ohr eines Nutzers platziert zu werden, wobei das ITE-Teil und das BTE-Teil zumindest mechanisch mittels eines Verbindungselementes (3) miteinander verbunden sind, wobei das Hörgerät eine wiederaufladbare Energiequelle (4) und elektrische Ladeakontakte aufweist, die das Laden an der wiederaufladbaren Energiequelle erlauben, wenn sie elektrisch mit Ladeankontakten einer Ladestation (6) verbunden sind, **DADURCH GEKENNZEICHNET, DASS** das Verfahren außerdem umfasst:
Laden der Energiequelle über die elektrischen Ladekontakte, die in einem elektrischen Anschluss (5) des mit dem BTE-Teil (2) verbindbaren Verbindungselementes (3) angeordnet sind.

12. Verfahren gemäß Anspruch 11, bei dem das Verbindungselement (3) und/oder das ITE-Teil (1) als erneuerbares Teil zum regulären Austausch durch ein entsprechendes Teil ausgebildet sind.

13. Verfahren gemäß Anspruch 11 oder 12, bei dem vorgesehen ist, dass die wiederaufladbare Energiequelle (4) in dem ITE-Teil (1) oder in dem Verbindungselement (3) angeordnet ist und dass das kombinierte, erneuerbare Teil durch ein entsprechendes Teil ausgetauscht wird, wenn die erneuerbare Energiequelle geladen werden muss.

14. Hörsystem mit
zumindest einem ITE-Teil (1) und einem Verbindungselement (3) eines Hörgerätes gemäß einem der Ansprüche 1 bis 9 und mit einer Ladestation (6), wobei das Verbindungselement einen Anschluss (5) aufweist, der ausgebildet ist, das ITE-Teil (1) mit dem BTE-Teil (2) während normalen Betriebs des Hörgerätes zu verbinden und wobei die Ladestation (6) ausgebildet ist, den Anschluss (5) zum elektrischen Laden der Energiequelle (4) des Hörgerätes zu nutzen.

15. Hörsystem gemäß Anspruch 14, das dazu ausgebildet ist, vorzusehen, dass der elektrische Kontakt zwischen den elektrischen Ladekontakten und dem elektrischen Gerät und Ladekontakten der Ladestation (6) mittels eines Kabels hergestellt ist mit einem elektrischen Anschluss (5), der zu einem elektrischen Anschluss (23) des BTE-Teils (2) passt.

## Revendications

1. Appareil d'écoute comprenant une partie ITE (1) adaptée pour être placée à l'intérieur d'un conduit auditif d'un utilisateur et une partie BTE (2) adaptée pour être placée derrière une oreille de l'utilisateur, les parties ITE et BTE étant raccordées au moins mécaniquement par un élément de raccordement (3), l'appareil d'écoute comprenant une source d'énergie rechargeable (4) et des bornes de charge électrique pour permettre la recharge de la source d'énergie rechargeable lorsqu'elles sont connectées électriquement à des bornes de charge d'une station de recharge (6), **caractérisé en ce que** les bornes de charge électrique de l'appareil d'écoute sont situées dans un connecteur électrique (5) de l'élément de raccordement (3) qui peut être connecté à la partie BTE (2).

2. Appareil d'écoute selon la revendication 1, dans lequel la source d'énergie rechargeable (4) comprend une batterie rechargeable.

3. Appareil d'écoute selon la revendication 2, dans lequel la batterie rechargeable (4) est située dans la partie ITE (1) ou dans l'élément de raccordement (3).

4. Appareil d'écoute selon l'une quelconque des revendications 1 à 3, dans lequel la partie ITE (1) comprend un récepteur.

5. Appareil d'écoute selon l'une quelconque des revendications 1 à 4, dans lequel ledit connecteur électrique (5) utilisé pour la recharge de la source d'énergie rechargeable (4) dans une station de recharge (6) est adapté pour être utilisé pour la connexion électrique de la partie ITE (1) à la partie BTE (2) pendant un fonctionnement normal.

6. Appareil d'écoute selon l'une quelconque des revendications 1 à 5, dans lequel la partie BTE (2) comprend un boîtier extérieur (21) fermé hermétiquement.

7. Appareil d'écoute selon l'une quelconque des revendications 1 à 6, dans lequel la partie ITE (1) comprend un microphone (8).

8. Appareil d'écoute selon l'une quelconque des revendications 1 à 7, dans lequel la partie BTE (2) comprend une unité de traitement du signal (22).

9. Appareil d'écoute selon l'une quelconque des revendications 1 à 8, dans lequel la partie ITE (1) ou l'élément de raccordement (3) comprend des circuits de gestion de la recharge de la source d'énergie rechargeable (4).

10. Utilisation d'un appareil d'écoute selon l'une quelconque des revendications 1 à 9.

11. Procédé de recharge d'une source d'énergie rechargeable d'un appareil d'écoute comprenant une partie ITE (1) adaptée pour être placée à l'intérieur d'un conduit auditif d'un utilisateur et une partie BTE (2) adaptée pour être placée derrière une oreille de l'utilisateur, les parties ITE et BTE étant raccordées au moins mécaniquement par un élément de raccordement (3), l'appareil d'écoute comprenant une source d'énergie rechargeable (4) et des bornes de charge électrique pour permettre la recharge de la source d'énergie rechargeable lorsqu'elles sont connectées électriquement à des bornes de charge d'une station de recharge (6), **caractérisé en ce que** le procédé comprend en outre :
la recharge de ladite source d'énergie par l'intermédiaire desdites bornes de charge électrique situées dans un connecteur électrique (5) de l'élément de raccordement (3) qui peut être connecté à la partie BTE (2).

12. Procédé selon la revendication 11, dans lequel l'élément de raccordement (3) et/ou la partie ITE (1) sont adaptés pour être des pièces remplaçables destinées à être régulièrement remplacées par des pièces correspondantes.

13. Procédé selon la revendication 11 ou 12, permettant que la source d'énergie rechargeable (4) soit située dans la partie ITE (1) ou dans l'élément de raccordement (3), et que la pièce remplaçable combinée soit remplacée par une pièce correspondante lorsque la source d'énergie renouvelable doit être rechargée.

14. Système d'écoute, comprenant
au moins une partie ITE (1) et un élément de raccordement (3) d'un appareil d'écoute selon l'une quelconque des revendications 1 à 9 et une station de recharge (6), l'élément de raccordement comprenant un connecteur (5) adapté pour connecter électriquement la partie ITE (1) à la partie BTE (2) pendant un fonctionnement normal de l'appareil d'écoute et la station de recharge (6) étant adaptée pour utiliser ledit connecteur (5) pour la recharge électrique, de la source d'énergie (4) de l'appareil d'écoute.

15. Système d'écoute selon la revendication 14, adapté pour permettre que le contact électrique entre les bornes de charge électrique de l'appareil d'écoute et les bornes de charge de la station de recharge (6) soit établi par l'intermédiaire d'un câble avec un connecteur électrique (5) correspondant à un connecteur électrique (23) de la partie BTE (2).
